# EUROPEAN PATENT SPECIFICATION

(11) **EP 1 376 559 B1**
(45) Date of publication and mention of the grant of the patent: **08.08.2007**
(21) Application number: 03253867.0
(22) Date of filing: 19.06.2003
(51) Int. Cl.: G11B 7/125, G11B 7/12

(54) **Pickup device and information recording apparatus**
Abtastvorrichtung und Informationsaufzeichnungsgerät
Dispositif de lecture et appareil d'enregistrement d'informations

(30) Priority: 21.06.2002 JP 2002180810
(43) Date of publication of application: 02.01.2004
(73) Proprietor: Pioneer Corporation, Meguro-ku, Tokyo (JP)
(72) Inventor: Sasaki, Yoshio, c/o Pioneer Corporation, Tokorozawa-shi, Saitama (JP); Furukawa, Masakazu, Pioneer Corporation, Tokorozawa-shi, Saitama (JP); Adachi, Masatoshi, c/o Pioneer Corporation, Tokorozawa-shi, Saitama (JP); Nakagawa, Hidenori, c/o Pioneer Corporation, Tokorozawa-shi, Saitama (JP); Uchiumi, Satoshi, Pioneer Corporation, Tokorozawa-shi, Saitama (JP)
(74) Representative: Haley, Stephen

(56) References cited:
- US-B1- 6 392 967
- PATENT ABSTRACTS OF JAPAN vol. 2000, no. 14, 5 March 2001 (2001-03-05) & JP 2000 315332 A (SONY PRECISION ENG CENTER SINGAPORE PTE LTD), 14 November 2000 (2000-11-14)

## Description

The present invention relates to a pickup device for a drive apparatus of an optical disc.

There is known a pickup device which is utilized for a drive apparatus of an optical disc and which irradiates a light beam for an information recording/reproduction to the disc. As for a laser diode provided in a pickup as a light source to irradiate a light beam, its characteristic is more or less different from each other among a plurality of laser diodes due to the individual differences. Conventionally, the drive apparatus was designed and manufactured so that information recording/reproduction could be executed with a desired recording characteristic as a whole drive apparatus in which the pickup device was installed, without taking account of the individual differences in the characteristics of the pickup devices.

However, there is a following problem caused by the individual difference in the characteristic of the pickup device.

As the speed of information recording/reproduction for an optical disc is increased and the recording speed becomes twice, 4 times or 8 times, the influence to the recording-reproduction caused by the individual difference becomes larger. Thus, a write strategy and the like should be designed by taking account of the individual characteristic of each pickup so as to maintain the stable recording/reproduction operation.

If not only information about the difference in characteristic of the pickup device but also various kinds of information associated with the individual pickup device are obtained and utilized, the operation stability and reliability of the drive apparatus in which the pickup is installed will be improved.

JP-A-08306060 discloses a pick-up device with a storage element.

The present invention has been achieved in order to solve the above problem. It is an object of this invention to provide the pickup device which is capable of improving the recording/reproduction characteristic and operation stability by providing information associated with individual pickup device.

According the present invention, there is provided a pickup device comprising:
a laser light source;
a memory which stores individual information associated with the pickup device; and
a driver unit which drives the laser light source to radiate a light beam by supplying a laser driving signal, characterised in that the individual information is information of a waveform of the laser driving signal determined in consideration of an individual characteristic of the laser light source defining a relation between the laser driving signal supplied to the laser light source and an intensity of the light beam radiated by the laser light source.

By the above information recording apparatus, the storage element stores the individual information associated with the pickup device. When information is recorded, the optimum recording condition is determined based on the individual information read out from the storage element, and the pickup device is controlled according to the optimum recording condition thus determined. As a result, information can be recorded according to the recording condition determined in consideration of the individual characteristic of the pickup device.

The nature, utility, and further features of this invention will be more clearly apparent from the following detailed description with respect to preferred embodiment of the invention when read in conjunction with the accompanying drawings briefly described below.
FIG. 1 shows a schematic configuration of a drive apparatus to which a pickup device according to an embodiment of this invention is applied.
FIG. 2 shows a schematic configuration of a drive apparatus to which the pickup device according to the preferred embodiment of this invention is applied.
FIG. 3A to 30 show examples of recording light waveforms of multi-pulse type and non-multi-pulse type.
FIGS. 4A and 4B show an example of characteristic information which is stored in the memory
FIGS. 5A to 5C show examples of the recording light waveform of the multi-pulse type.
FIGS. 6A to 6C show examples of the recording light waveform of the non-multi-pulse type.

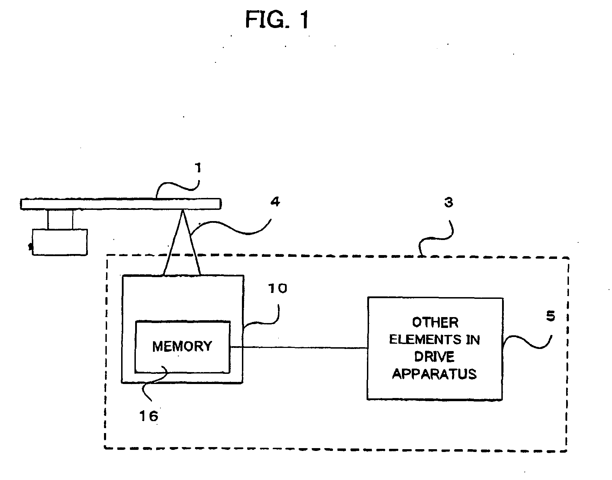

The preferred embodiments of the present invention will now be described below with reference to the attached drawings. FIG. 1 shows a schematic configuration of a drive apparatus to which the pickup device according to an embodiment of this invention is applied. As shown in FIG. 1, the drive apparatus 3 executes recording/reproduction of information for an optical disc 1, and includes a pickup device 10 and other elements 5. The pickup 10 irradiates a light beam 4 to the disc 1 to record information and reproduce the information recorded on the disc 1 by receiving a return light beam of the light beam 4 from the disc 1 and converting the return light beam into an electric signal.

As shown in FIG. 1, the pickup device 10 has a memory 16. The memory 16 stores individual information of the pickup device 10. Individual information is such as characteristic information of the laser diode which is installed in the pickup device 10. The other elements 5 in the drive apparatus 3 read out necessary information from the memory 16, and carry out necessary controls and operations by utilizing the information. That makes it possible for the drive apparatus 3 to utilize the individual information such as the characteristic information of the pickup device 10 and to operate properly. Thus, information recording/reproduction by the drive apparatus 3 itself can be improved and its operation can be stabilized.

### [Embodiment]

Now, the preferred embodiment of the present invention will be described.

### (1) Schematic Configuration

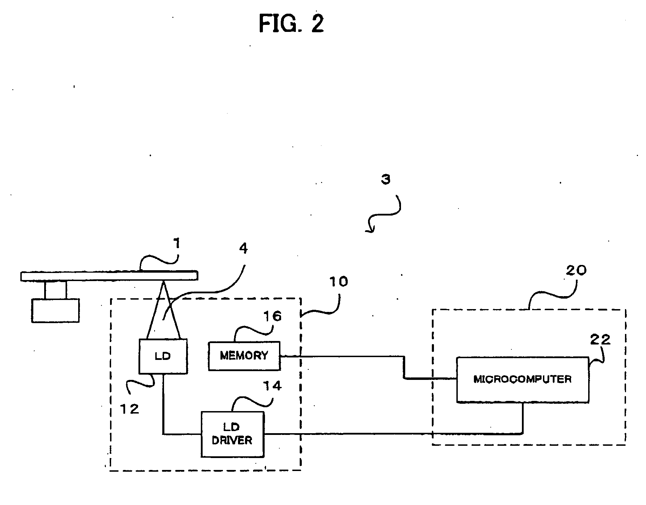

FIG. 2 shows the configuration of the drive apparatus 3 according to the embodiment. As shown, the drive apparatus 3 includes the pickup device 10 and the control unit 20. The control unit 20 controls the pickup device 10 to execute information recording/reproduction by the light beam 4, and includes a microcomputer 22 which performs various kinds of control by executing predetermined program.

The pickup device 10 has a laser diode (LD) 12 which works as a light source, a LD driver 14 which radiates the light beam 4 according to a predetermined write strategy by controlling the driving current supplied to the LD 12, and the memory 16.

In the embodiment, an individual characteristic of the pickup device 10, concretely characteristic information of the LD 12, is stored in the memory 16. The microcomputer 22 reads out the characteristic information peculiar to the pickup device from the memory 16 and determines an optimum write strategy based on the characteristic information, when the microcomputer 22 records information. The determined write strategy information is supplied to the LD driver 14 in the pickup device 10. The LD driver 14 supplies the driving current to the LD 12 according to the supplied write strategy information to radiate the light beam 4. The characteristic information stored in the memory 16 is about the pickup device 10, more concretely speaking, individual characteristic information of the LD 12. In other words, the characteristic information shows deviation from a standard characteristic of the LD 12. Therefore, the microcomputer 22 can determine an optimum write strategy for the pickup device 10 by taking account of the characteristic information, and as the result, the drive apparatus 3 can improve the characteristic of recording/reproduction and stabilize the operation.

### (2) Characteristic Information

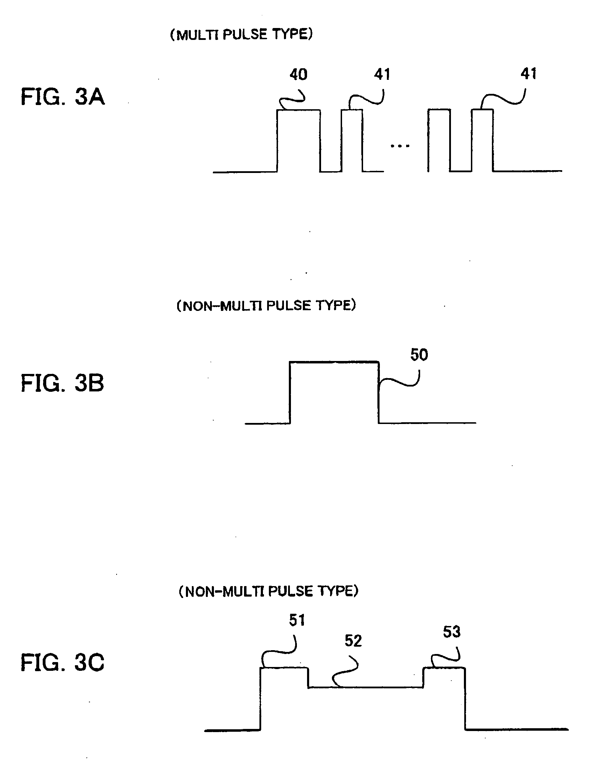

Next, the characteristic information which is stored in the memory 16 will be described. Recording light waveforms in executing information recording to the disc 1 (hereafter, it is called "recording light waveform") can be roughly classified into the multi-pulse type and the non-multi-pulse type. FIG. 3A shows the recording light waveform of the multi-pulse type. The recording light waveform of the multi-pulse type includes the top pulse 40 and the multi-pulse section which includes a plurality of pulses 41 whose width is narrower than that of the top pulses 40. In the recording light waveform of the multi-pulse type, the number of the pulses 41 included in the multi-pulse section changes dependently upon the recording data length.

Recording light waveforms of the non-multi-pulse type are shown in FIG. 3B and 3C. The waveform shown in FIG. 3B includes one pulse 50, and the waveform shown in FIG. 3C includes a top pulse 51, a last pulse 53 and an intermediate level portion 52 whose level is lower than those of the top pulse 51 and the last pulse 53.

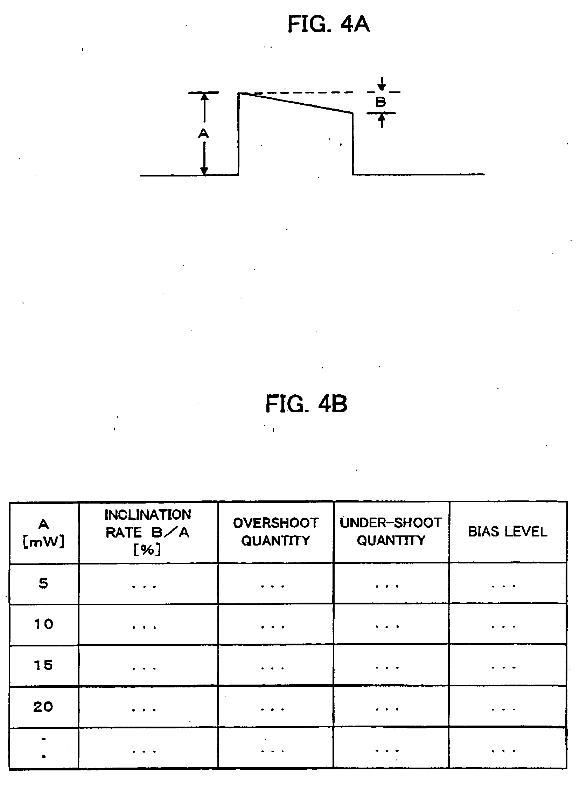

FIG. 4B is an example of characteristic information which is stored in the memory 16. The example includes an inclination rate, an overshoot quantity, an undershoot quantity and a bias level as different individual information of each pickup device 10. Namely, since those quantities are different between different pickup devices 10, they are stored in the memory 16 installed in the pickup device 10. Those quantities are stored in the memory 16 in correspondence with the level "A" of the recording light waveform during recording, serving as the parameter. The level "A" is a level of the top pulse as shown in FIG. 4A.

Now, each quantity will be explained. It is noted that those quantities may be different among individual pickup devices whichever the recording light waveform of the multi-pulse type or the recording light waveform of the non-multi-pulse type described-above is utilized. Referring to the recording light waveform which is easier to explain, the content of each quantity is described.

### (2-1) Inclination rate

An inclination rate is a degree of an inclination of the recording light waveform. If the starting level and the ending level of the recording light waveform in recording marks are not constant, it is expressed as "the recording light waveform has an inclination. In FIG. 4A, an example of the recording light waveform of a non-multi-pulse type (FIG. 3B) is shown. The recording light waveform includes a single pulse. Though the starting level of the pulse is "A", the ending level of the pulse decreases by the quantity "B". In that case, the inclination rate can be defined as "B/A".

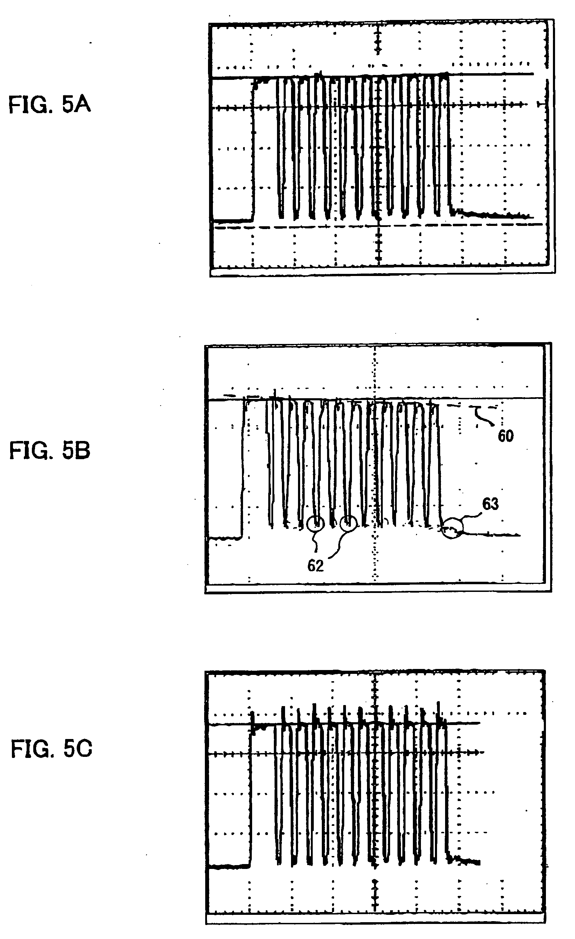

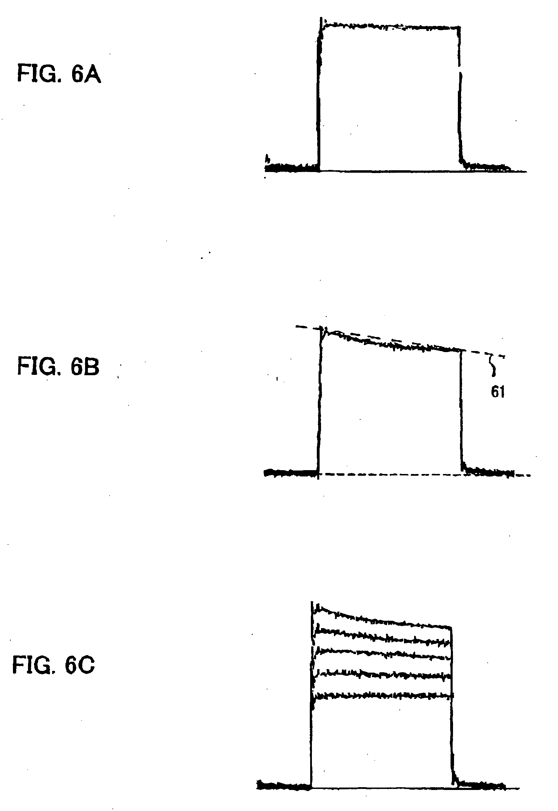

FIGS. 5A to 5C show examples of recording light waveforms of the multi-pulse type, and FIG. 6A to 6C show examples of recording light waveforms of the non-multi-pulse type. In the case of recording light waveforms of the multi-pulse type, the levels of the top pulse and the multi-pulse section in the recording light waveform shown in FIG. 5A are almost constant, and the inclination rate is zero. On the other hand, as shown by the broken line 60, the level of the pulse is gradually decreasing in the recording light waveform in FIG. 5B, and there occurs an inclination of the recording light waveform.

In the recording light waveform of the non-multi-pulse type, as to the recording light waveform shown in FIG. 6A, the starting level and the ending level are almost constant, and the inclination rate is zero. As to the recording light waveform in FIG. 6B, the level of the pulse decreases at the ending level as shown by the broken line 61, and an inclination occurs. It is noted that FIG. 6B shows an example of the recording light waveform whose inclination rate is large for the sake of explanation, and it does not mean a pickup device which has such a large inclination rate is actually utilized in practice.

Though the recording light waveforms shown in FIG. 5A and FIG. 6A are ideal recording light waveforms which have no inclination, in practice, an actual pickup device has an inclination as shown in FIG. 5B and FIG. 6B dependently upon the characteristics of the laser diode and the like. Thus, if the inclination rate is stored in the memory 16 as individual characteristic information for each pickup device, proper correction can be executed in accordance with the characteristics of pickup devices. In practice, when there occurs an inclination as the characteristic of the pickup device, correction is executed in order to extend pulse width. Namely, since the laser power is insufficient at the ending portion of the recording light waveform due to the inclination, correction is executed to increase pulse width of the recording light waveform, thereby compensating for the insufficiency. In the case of the recording light waveform of the multi-pulse type shown in FIG. 5B, correction should be executed to extend pulse width of the top pulse and/or the multi-pulse.

The inclination of the recording light waveform is sometimes varies dependently upon the recording power level. The example is shown in FIG. 6C. Recording light waveforms of a plurality of recording power levels are shown in FIG. 6C in a superimposed manner. It is understood that, as the recording power level becomes larger, the inclination of the recording light waveform also becomes larger. That means the optimum light strategies depend on the recording power levels of recording light waveforms. Like that, when the inclination of the recording light waveform is different because of the recording power level of the recording light waveform, the inclination rate of the recording light waveform for each recording power level should be stored in the memory 16 as the above individual characteristic information. In an example of the characteristic information shown in FIG. 4B, the inclination rate is stored for each recording power level (the level "A" in FIG. 4A) of the recording light waveform. Accordingly, the microcomputer 22 determines an optimum write strategy by utilizing the inclination rate for each recording power level stored in the memory 16, thereby to execute stable recording. Actually, though an optimum recording power for the disc is different in accordance with recording sensitivity of the disc which is an object of information recording, the stable recording characteristic can be obtained during recording information to the discs having different sensitivity if the inclination rate for each recording power level of the recording light waveform is stored like the above. Moreover, in the case of the disc whose necessary recording power is largely different in accordance with the change of recording speed such as CD-R, DVD-R, DVD+R and the like, it is effective that an optimum write strategy can be determined according to the recording power like this.

### (2-2) Bias level

Next, the bias level will be described as an example of the characteristic which may be different between different pickups. In the case of the recording light waveform of the multi-pulse type shown in FIG. 3A, the bias level is the level in the period except the top pulse 40 and the multi-pulse 41. In the case of the recording light waveform of the non-multi-pulse type which is shown in FIG. 3B and 3C, the bias level is the level in the period except the pulse 50 and pulse portions 51 to 53.

Comparing FIG. 5A and FIG. 5B with each other, the bias level between the multi-pulses (portions of the circle 62) and the bias level behind the multi-pulses (a portion of the circle 63) in FIG. 5B are higher than those in FIG. 5A. If a certain pickup device has the characteristic of the bias level as shown in FIG. 5B, correction is needed to decrease the bias level to the level shown in FIG. 5A by decreasing the driving current value which is supplied to the LD 12 in the period of the bias level. Accordingly, if individual information indicating the bias level is stored as shown in FIG. 4B, the drive apparatus which includes the pickup device can execute recording in accordance with the proper write strategy.

### (2-3) Overshoot quantity/undershoot quantity

Next, overshoot quantity and undershoot quantity will be described as an individual characteristic of the pickup device. Overshoot quantity is almost zero in the recording light waveform in FIG 5A, but overshoot quantity is comparatively large in the recording light waveform shown in FIG. 5C (This is an example having overshoot which corresponds to approximately 8% of the levels of the top pulse and multi-pulse). In the case that the pickup device has such an overshoot, an optimum write strategy in utilizing the pickup device should be determined by considering the overshoot quantity. Thus, the overshoot quantity is stored as individual characteristic information of the pickup device in the memory 16. When the overshoot quantity is large, the leading edge of the mark is emphasized and the pit length which is formed is extended, and hence the correction should be executed in order to reduce the pulse width of the top pulse.

Overshoot occurs at the portion of the leading edge of the pulse, and undershoot occurs at the portion of the trailing edge of the pulse, specifically the top pulse and the multi-pulse of the recording light waveform of multi-pulse type and the single pulse of the recording light waveform of the non-multi-pulse type. Therefore, by storing the quantity of the undershoot thus occurs as individual information in the memory 16 as well, an optimum write strategy can be obtained by executing necessary correction.

### (2-4) Memory storage content

As mentioned above, by storing the inclination quantity, the bias level, the overshoot quantity/undershoot quantity and the like in the memory 16 as shown in FIG. 4B, the drive apparatus having the pickup device can determine an optimum write strategy by considering the individual characteristic information, thereby improving and stabilizing the recording characteristic.

In the example shown in FIG. 4B, not only the inclination rate but also the bias level and overshoot quantity/undershoot quantity are stored for each recording power. In a case that the variation of the bias level, the overshoot quantity or the undershoot quantity depending on the recording power is small, only one value may be stored.

### (2-5) Other individual characteristic information of pickup

Each kind of information, for example, a leading time and/or a trailing time in each pulse portion of the recording light waveform, a wavelength of the installed LD and an aberration included in the pickup device can be stored in the memory 16 as the individual characteristic information different between pickups as well as the inclination rate, in addition to the bias level and the overshoot quantity/the undershoot quantity. Thereby, an optimum recording condition, like an optimum write strategy, can be determined for the drive apparatus which utilizes the pickup device, and the stable recording characteristic can be obtained by suppressing characteristic difference among plural pickup devices.

### (2-6) Modification

In the above example, the microcomputer 22 refers to individual characteristic information of the pickup device which is stored in the memory 16, determines an optimum write strategy for each pickup device and executes recording. Instead, it is possible that an optimum write strategy is determined in advance by considering individual characteristics of each pickup, and the result is stored in the memory 16. In this case, the microcomputer 22 only has to read out the optimum write strategy information from the memory 16 and supply the strategy information to the LD driver 12 in the pickup device 10.

### (3) Other storage information

Next, useful information to be stored in the memory 16, in addition to the above-described individual characteristic information of the pickup device, will be described.

### (3-1) Signal detecting level, errors and the like

When the drive apparatus determines the recording condition by OPC (Optimum power Control), for example, recording is executed with varying the condition such as the recording power, and then reproduction is executed to obtain the recording condition under which the β value, the modulation degree and the like becomes equal to the desired value. Since the reproducing signal from an optimally recorded disc may be different in each pickup, the errors (correlation) between each pickup device and a standard reproducing device or a target value of the pickup device may be stored in the memory. Thus, stable recording can be ensured by using any pickup.

In cases of DVD-R and DVD-RW, an LPP detecting level is different in each pickup device due to optical axis deviation of the light beam radiated from the pickup. Therefore, if the LPP detecting level is stored for each pickup device, a proper slice level for the LPP detection signal can be set in each pickup and the LPP detection can be executed stably.

### (3-2) Temperature characteristic

An error can occur in a detected temperature of a temperature sensor which is installed in the pickup device. By storing an error between an actual temperature and the detected temperature for each pickup into the memory, the pickup device and other product or component can be used accurately even at each rated temperature.

As temperature characteristic variation of differential quantum efficiency (η) of LD becomes larger, an error in temperature correction of the laser power also becomes larger. Therefore, accuracy of temperature correction can be improved by storing the temperature characteristic of the differential quantum efficiency of each LD in the memory.

Further, when the drive apparatus is used in combination with a FMD (Front Monitor Diode), an automatic adjustment is enabled by storing a sensitivity characteristic of the FMD which is used in adjusting the LD output power.

### (3-3) Necessary minimum superimposing level of high frequency signal

A necessary level of high frequency signal superimposition quantity to the LD in the pickup device is different in each pickup device. A recording characteristic, a reproduction characteristic, an LPP error/an ATIP error in recording and the like are confirmed for each pickup, and the necessary minimum superimposition level for each pickup is stored in the memory. By this, unnecessarily large superimposition of high frequency signal can be prevented and unnecessary radiation quantity can be reduced.

### (3-4) Sensitivity of a focus/tracking actuator

By storing sensitivity of the focus actuator in the memory, detecting accuracy of the distance to the disc by the drive voltage can be improved. This is effective in the case that the disc tilt is detected by utilizing the detected distance.

By storing sensitivity of the tracking actuator in the memory, detecting accuracy of tracking deviation quantity by the drive voltage can be increased, and that is effective for the midpoint servo during the tracking search.

### (3-5) Information about manufacturing and adjusting process

Adjusting values used in the manufacturing process of the pickup device can be stored in the memory. Once the value which has been already adjusted is stored in the memory, the same adjustment can be omitted thereafter, so the number of processes can be reduced and difference between processes can be suppressed. Further, by storing information indicating that each process has been executed in the memory, process control can be easily performed.

Moreover, if the final adjusting value can be obtained from the memory in the pickup apparatus after the product is put into the market, the final adjusting value is useful at the time of maintenance service or else.

Also, if the manufacturing center, the manufacturing line number and the error history are stored in the memory, the rate of defective occurrence can be obtained for each manufacturing center and for each manufacturing line after the product is put into the market. That will lead to the decrease of defective rate in the manufacturing line.

### (3-6) Deterioration detection of LD

The temperature at the time of product delivery, the temperature characteristic and the current value (I-read) when the read power is irradiated can be stored in the memory. Thereby, LD deterioration can be diagnosed at the time of maintenance service and the like by measuring I-read. Also, if the lighting time of the LD is stored in the memory, an accumulated lighting time can be obtained and the life of the LD can be presumed.

As described above, by providing the pickup device with a memory and storing individual information of the pickup device, specially individual characteristic information, the influence by the difference in the characteristic of each pickup device can be suppressed and the pickup device can operate in an optimum state.

## Claims

1. A pickup device (10) comprising:
a laser light source (12);
a memory (16) which stores individual information associated with the pickup device (10); and
a driver unit (14) which drives the laser light source (12) to radiate a light beam (4) by supplying a laser driving signal, **characterised in that** the individual information is information of a waveform of the laser driving signal determined in consideration of an individual characteristic of the laser light source (12) defining a relation between the laser driving signal supplied to the laser light source and an intensity of the light beam radiated by the laser light source.

2. An information recording apparatus comprising:
a pickup device (10) according to claim 1; and
a control unit (20) which reads out the individual information from the memory and controls the driver unit based on the read-out individual information.

## Patentansprüche

1. Abnehmervorrichtung (10), die umfasst:
eine Laserlichtquelle (12);
einen Speicher (16), der individuelle Informationen speichert, die mit der Abnehmervorrichtung (10) verbunden sind; und
eine Ansteuereinheit (14), die die Laserlichtquelle (12) so ansteuert, dass sie einen Lichtstrahl (4) ausstrahlt, indem sie ein Laser-Ansteuersignal zuführt, **dadurch gekennzeichnet, dass** die individuellen Informationen Informationen über eine Wellenform des Laser-Ansteuersignals sind, die unter Berücksichtigung einer individuellen Charakteristik der Laserlichtquelle (12) bestimmt wird, die eine Beziehung zwischen dem der Laserlichtquelle zugeführten Laser-Ansteuersignal und einer Intensität des durch die Laserlichtquelle ausgestrahlten Lichtstrahls definiert.

2. lnformationsaufzeichnungsvorrichtung, die umfasst:
eine Abnehmervorrichtung (10) nach Anspruch 1; und
eine Steuereinheit (20), die die individuellen Informationen aus dem Speicher ausliest und die Ansteuereinheit auf Basis der ausgelesenen individuellen Informationen steuert.

## Revendications

1. Dispositif de lecture(10) comprenant :
une source de lumière laser (12) ;
une mémoire (16) qui stocke une information individuelle associée au dispositif de lecture(10) ; et
une unité de dispositif de pilotage (14) qui pilote la source de lumière laser (12) pour irradier un faisceau lumineux (4) en appliquant un signal de pilotage de laser, **caractérisé en ce que** l'information individuelle est une information d'une forme d'onde du signal de pilotage de laser déterminée en considération d'une caractéristique individuelle de la source de lumière laser (12) définissant une relation entre la signal de pilotage de laser appliqué sur la source de lumière laser et une intensité du faisceau lumineux irradié par la source de lumière laser.

2. Appareil d'enregistrement d'information comprenant :
un dispositif de lecture (10) selon la revendication 1 ; et
une unité de commande (20) qui lit l'information individuelle à partir de la mémoire et qui commande l'unité de dispositif de pilotage sur la base de l'information individuelle lue.
